# EUROPÄISCHE PATENTSCHRIFT

(11) **EP 2 574 412 B1**
(45) Veröffentlichungstag und Bekanntmachung des Hinweises auf die Patenterteilung: **18.06.2014**
(21) Anmeldenummer: 11183450.3
(22) Anmeldetag: 30.09.2011
(51) Int. Cl.: B22D 11/00, G01B 5/012, G01B 11/00, G01B 21/04, G01C 15/00

(54) **Messtaster, Messsystem, Verfahren zur laseroptischen Ermittelung der Höhenlage einer Strangführungsrolle, und Verwendung des Messsystems**
Measuring probe, measuring system, method for laser optical recording of the height of a guide roller and use of the measuring system
Capteur de mesure, système de mesure, procédé d'établissement par laser optique de la position en hauteur d'un cylindre de corset de guidage et utilisation du système de mesure

(43) Veröffentlichungstag der Anmeldung: 03.04.2013
(73) Patentinhaber: Siemens VAI Metals Technologies GmbH, 4031 Linz (AT)
(72) Erfinder: Fürnhammer, Thomas, 4400 Steyr (AT); Guttenbrunner, Josef, 4522 Sierning (AT); Hinterreiter, Christian, 4210 Unterweitersdorf (AT); Mairhofer, Markus, 4040 Linz (AT); Hausleithner, Wolfgang, 4730 Waizenkirchen (AT); Penn, Johann, 4203 Altenberg (AT); Plank, Philipp, 4020 Linz (AT); Starrermair, Michael, 4020 Linz (AT)
(74) Vertreter: Maier, Daniel Oliver

(56) Entgegenhaltungen:
- EP-A1- 0 598 709
- EP-A1- 1 441 194
- EP-A1- 2 112 459
- EP-A1- 2 199 739
- EP-A1- 2 479 531
- WO-A1-88/00101
- AT-A4- 509 606
- DE-A1- 19 907 820
- DE-A1-102007 019 453
- DE-A1-102009 030 929
- DE-A1-102011 084 522
- GB-A- 2 007 374
- GB-A- 2 431 989
- US-A1- 2002 170 210
- US-A1- 2011 094 117

## Beschreibung

### Gebiet der Technik

Die vorliegende Erfindung betrifft einen Messtaster, der sich zur Abtastung einer Mantelfläche einer zylindrischen Rolle eignet (beispielsweise einer Rolle in einer Strangführung einer Stranggießmaschine, oder einer Rolle in einem Rollgang eines Kalt- oder Warmwalzwerks oder einer Bandbehandlungsanlage). Unter Abtastung wird die Erfassung zumindest eines Punkts durch Berühren verstanden, wobei eine Tastfläche des Messtasters den Punkt auf der Mantelfläche berührt.

Weiters betrifft die Erfindung ein Messsystem, das zur laseroptischen Vermessung der Höhenlage einer zylindrischen Rolle geeignet ist.

Außerdem betrifft die Erfindung ein Verfahren zur laseroptischen Ermittlung der Ist-Höhenlage H_{Ist} einer Strangführungsrolle in einer Strangführung durch ein Messsystem. Die Höhenlage einer Strangführungsrolle ist für den störungsfreien Betrieb einer Stranggießmaschine wichtig, da insbesondere ein teilerstarrter Strang nur geringen mechanischen Belastungen standhalten kann. Zu große mechanische Belastungen, z.B. aufgrund einer falsch justierten Strangführungsrolle, können zu unzulässig hohen Biegebeanspruchungen führen, die zu Rissen im Strang bzw. sogar zu einem Durchbruch der dünnen Strangschale führen können.

Schließlich betrifft die Erfindung die Verwendung (Anspruch 15) des Messsystems nach einem der Ansprüche 1 bis 9 zur Durchführung des Verfahrens nach einem der Ansprüche 10 bis 14.

### Stand der Technik

Es ist bekannt, die Rollen in einer Strangführung einer Stranggießmaschine (auch als Strangführungsrollen bezeichnet) auf einem sogenannten Richtstand einzurichten. Dabei wird typischerweise ein Teil der Strangführung, z.B. der Innen- oder Außenrahmen eines Strangführungssegments, auf dem Richtstand aufgespannt, und der Ist-Abstand der Strangführungsrollen gegenüber einem Stahllineal durch Messmittel, z.B. durch ein Stangenmikrometer, ermittelt. Aus der Anlagengeometrie der Strangführung können die Soll-Abstände zwischen dem Lineal und den Rollen bestimmt werden, sodass die Höhenlage der Strangführungsrollen, z.B. durch Beilagscheiben (engl. "shims"), exakt justiert werden kann. Die Ermittlung der Höhenlagen der Strangführungsrollen ist aufgrund der Durchbiegung des Stahllineals ungenau und aufgrund der großen Anzahl von manuellen Messungen sehr zeitaufwändig. Ein weiterer Nachteil besteht darin, dass die Höhenlagen nicht automatisch erfasst und protokolliert werden.

Aus dem techn. Gebiet der Messtechnik ist zwar die laseroptische Nivellierung eines Objekts mittels eines Messtasters grundsätzlich bekannt, allerdings sind die existierenden, starr ausgebildeten Messtaster aufgrund der relativ großen Höhendifferenzen zwischen verschiedenen Rollen eines gebogenen Strangführungssegments ungeeignet, die Ist-Höhenlage genau und schnell zu ermitteln.

Dokument DE 10 2009 030 929 offenbart Koordinatenmessgerät mit einem Tastkopf, an der ein Tastelement beweglich angeordnet ist.

### Zusammenfassung der Erfindung

Die Aufgabe der Erfindung ist es, die Nachteile des Stands der Technik zu überwinden und einen Messtaster und ein Verfahren zur Ermittlung der Ist-Höhenlage einer Strangführungsrolle in einer Strangführung darzustellen, mit denen die Ist-Höhenlage der Strangführungsrolle
- rasch, d.h. innerhalb einer kurzen Zeit für die Messung und Auswertung,
- mit möglichst einfachen Mitteln,
- ohne eine aufwändige Auswertung, und
- mit hoher Genauigkeit
bestimmt werden kann.

Diese Aufgabe wird durch einen Messtaster zur Abtastung einer Mantelfläche einer zylindrischen Rolle gelöst, aufweisend
- zumindest einen Taster mit einer Tastfläche;
- ein vertikales Führungsprofil das starr mit dem Taster verbunden ist;
- eine Laserempfangseinheit mit einem Detektorfeld und einer Abstandsauswerteeinheit, wobei die Laserempfangseinheit in vertikaler Richtung auf dem Führungsprofil verschiebbar ist, das Detektorfeld zur Detektion eines Laserstrahls ausgebildet ist, und die Abstandsauswerteeinheit einen ersten vertikalen Abstand VA₁ des Laserstrahls gegenüber der Unterkante der Laserempfangseinheit ermitteln kann; und
- eine Wegmesseinrichtung zur Bestimmung eines zweiten vertikalen Abstands VA₂ zwischen dem Taster und der Unterkante der Laserempfangseinheit.

Dabei kann ein Punkt auf der Mantelfläche der zylindrischen Rolle durch zumindest einen Taster mit einer Tastfläche abgetastet werden. Aus dem einen bzw. gegebenenfalls auch den mehreren Punkten auf der Mantelfläche kann auf die Höhenlage, gegebenenfalls unter Berücksichtigung der Geometrie (z.B. aufgrund des bekannten Rollendurchmessers), der Rolle ermittelt werden. Der Taster selbst ist starr mit einem vertikalen Führungsprofil des Messtasters verbunden, wobei das Führungsprofil z.B. ein rundes oder polygonales Profil aufweisen kann. Der Messtaster weist eine Laserempfangseinheit mit einem Detektorfeld auf, wobei das Detektorfeld zur Erfassung der Höhenlage eines Laserstrahls ausgebildet ist. Die Laserempfangseinheit ist dabei auf dem Führungsprofil verschiebbar, sodass Höhenlagen größer der Längserstreckung des Detektorfelds erfasst werden können. Das Detektorfeld umfasst zumeist mehrere, diskrete Detektoren, die z.B. in einer Spalte oder einer Matrix mit mehreren Spalten angeordnet sind. Das Detektorfeld selbst ist mit einer Abstandsauswerteeinheit verbunden, wobei diese den ersten vertikalen Abstand des Laserstrahls gegenüber der Unterkante der Laserempfangseinheit ermitteln kann. Da der Abstand der Unterkante der Laserempfangseinheit gegenüber dem Taster mittels einer Wegmesseinrichtung bestimmbar ist, ist somit auch der zweite vertikale Abstand des Laserstrahls vom Taster vollständig bestimmt. Hierbei kann die Wegmesseinrichtung z.B. im Führungsprofil integriert werden, oder außerhalb des Führungsprofils angeordnet werden. Zur Wegmessung können sämtliche berührende (z.B. Potentiometer) oder berührungslos arbeitende (z.B. eine magnetostriktive, induktive, kapazitive oder optische) Wegmesseinrichtungen eingesetzt werden.

Um die Genauigkeit des Messtasters über eine längere Einsatzdauer sicherzustellen, ist es vorteilhaft, den Taster auswechselbar auszubilden.

Um den Messtaster relativ einfach, robust und leicht zu halten ist es vorteilhaft, dass der Messtaster ein Kommunikationsmodul zur informationstechnischen Verbindung mit einer Auswerteeinheit aufweist, wobei das Kommunikationsmodul mit der Wegmesseinrichtung und der Abstandsauswerteeinheit verbunden ist. Dadurch werden die Daten vom Messtaster informationstechnisch (z.B. kabelgebunden oder kabellos) zur Auswerteeinheit, z.B. einem PC, übertragen, wobei die Auswerteeinheit die Höhenlage der Rolle bestimmt und gegebenenfalls eine Soll-Ist-Abweichung der Höhenlage errechnet. Beispielsweise ist das Kommunikationsmodul als eine Bluetooth- oder WLAN-Schnittstelle ausgebildet.

Alternativ ist es ebenfalls möglich, dass der Messtaster eine Auswerteeinheit aufweist, wobei die Auswerteeinheit mit der Wegmesseinrichtung und der Abstandsauswerteeinheit verbunden ist. In diesem Fall ist die Auswerteeinheit z.B. als Microcontroller ausgebildet, der in den Messtaster integriert ist. Dabei ist es möglich, dass der Messtaster auch eine Anzeigeeinheit (z.B. ein Display) aufweist, sodass die Höhenlage nicht nur am Messtaster ausgewertet sondern dort auch ausgegeben werden kann.

Zur Auslösung einer Messung ist es zweckmäßig, dass ein Auslöser mit dem Kommunikationsmodul oder der Auswerteeinheit signaltechnisch verbunden ist. Eine einfache Bedienung ist möglich, wenn der Auslöser auf dem Messtaster angeordnet ist.

Ein sicheres Aufsetzen des Messtasters auf eine Strangführungsrolle ist möglich, wenn jeweils ein Taster auf einem Schenkel angeordnet ist, wobei zwei Schenkel einen Winkel 45° < α < 135°einschließen. Sind die Geometrie des Messtasters, der Durchmesser der Rolle und der Abstand zwischen dem Taster und der Unterkante der Laserempfangseinheit bekannt, kann die Höhenlage der Strangführungsrolle einfach ermittelt werden.

Ein besonders einfaches Aufsetzen ist möglich, wenn der Messtaster zumindest drei Taster aufweist, wobei zwei Taster in einer ersten Ebene und ein Taster in einer zweiten Ebene angeordnet sind, und die erste Ebene parallel zur zweiten Ebene ausgerichtet ist. Dies kann z.B. dadurch erfolgen, dass jeweils zwei Schenkel hintereinander angeordnet sind, sodass die Laserempfangseinrichtung parallel zur ersten und zweiten Ebene, d.h. in einer Normalebene zur Längsachse der Rolle, angeordnet ist.

Ein definierter Linien- bzw. Punktkontakt zwischen dem Taster der Mantelfläche kann sichergestellt werden, wenn die Tastfläche eine gekrümmte, insbesondere eine zylindrische oder kugelförmige, Kontur aufweist.

Um eine ungewollte Verschiebung der Laserempfangseinheit nach dem Aufsetzen des Messtasters zu verhindern, ist es vorteilhaft, dass der Messtaster eine Arretiereinrichtung (z.B. eine Klemmeinrichtung oder eine Fixierschraube) zur Fixierung der Position der Laserempfangseinheit gegenüber dem Führungsprofil oder einen Dämpfer aufweist. Der Dämpfer (z.B. ein Gasdruckdämpfer) ist z.B. zwischen dem Führungsprofil und der Laserempfangseinheit angeordnet, sodass eine ungewollte Verschiebung der Laserempfangseinheit aufgrund der Schwerkraft der Laserempfangseinheit verhindert werden kann.

Es ist vorteilhaft, wenn ein Messsystem aufweist
- einen Laser;
- einen Messtaster;
- eine Auswerteeinheit, die mit dem Messtaster informationstechnisch verbunden ist; und
- eine Ausgabeeinheit zur Ausgabe der Höhenlage der Rolle.

Wie bereits oben angeführt, kann die Auswerteeinheit und gegebenenfalls auch die Ausgabeeinheit entweder baulich getrennt oder in den Messtaster integriert sein.

Vorzugsweise ist der Laser als Rotationslaser ausgebildet, wobei der rotierende Rotationslaser eine Lichtebene aufspannt. Damit kann ein Messtaster auf unterschiedlichen Positionen eingesetzt werden, ohne dass der Laser neu ausgerichtet werden muss.

Um die Position des Messtasters erfassen zu können, ist es vorteilhaft, dass das Messsystem einen Sender und der Messtaster einen Empfänger des Positionsmesssystems umfasst, wobei der Empfänger mit dem Kommunikationsmodul oder der Auswerteeinheit signaltechnisch verbunden ist, sodass die Position des Messtasters bestimmbar ist. Beim Positionsmesssystem kann es sich z.B. um ein aktives RFID Messsystem, UWB System, WLAN System, Infrarot- oder Ultraschall-Messsystem, aber auch um ein GPS oder ein sogenanntes "Differential-GPS" Messsystem handeln. Über die Position des Messtasters kann automatisiert die Ist-Höhenlage H_{Ist} der Rolle mit einer, gegebenenfalls positionsabhängigen, Soll-Höhenlage H_{Soll} verglichen werden, sodass die Auswerteeinheit selbsttätig eine Abweichung Δ zwischen einer Soll-Höhenlage H_{Soll} und der Ist-Höhenlage H_{Ist} ermittelt kann.

Weiters wird das (positionsabhängige) Protokollieren der Höhenlagen ermöglicht. Durch die Soll-Position und die Ist-Höhenlage der Strangführungsrolle wird ein würfelförmiges bzw. quaderförmiges Soll-Kontrollvolumen definiert, in dem die Strangführungsrolle zu liegen hat. Somit kann neben der der Abweichung der Ist-Höhenlage von der Soll-Höhenlage ggf. auch die Abweichung des Ist-Kontrollvolumens vom Soll-Kontrollvolumen (z.B. über den Abstand der Raumschwerpunkte der Kontrollvolumen) bestimmt werden. Das Ist-Kontrollvolumen ergibt sich aus der Ist-Position und der Ist-Höhenlage unter Berücksichtigung von Messtoleranzen.

Die erfindungsgemäße Aufgabe wird ebenfalls durch ein Verfahren zur laseroptischen Ermittlung einer Ist-Höhenlage einer Strangführungsrolle in einer Strangführung mittels eines Messsystems gelöst, umfassend einen Laser, einen Messtaster nach einem der Ansprüche 1 bis 7 mit einer Laserempfangseinrichtung, einem Detektorfeld, einer Abstandsauswerteeinheit, einem Taster und einer Tastfläche, und einer Auswerteeinheit, die mit dem Messtaster informationstechnisch verbunden ist, umfassend folgende Verfahrensschritte:
- Positionieren des Lasers;
- Einschalten des Lasers;
- Abtasten der Strangführungsrolle mittels des Messtasters, wobei zumindest eine Tastfläche des Messtasters einen Punkt auf der Mantelfläche der Strangführungsrolle berührt und ein Laserstrahl das Detektorfeld schneidet;
- Auslösen einer Messung;
- Ermitteln eines ersten vertikalen Abstands VA₁ zwischen dem Laserstrahl und der Unterkante der Laserempfangseinheit durch die Abstandsauswerteeinheit und eines zweiten vertikalen Abstands VA₂ zwischen dem Taster und der Unterkante der Laserempfangseinheit durch die Wegmesseinrichtung;
- Berechnen der Ist-Höhenlage H_{Ist} der Strangführungsrolle mit *H_{Ist} =VA*₁ *+VA*₂ in der Auswerteeinheit.

Vorzugsweise führt der Laser eine Rotationsbewegung aus, wobei der Laser eine Lichtebene aufspannt.

Es ist vorteilhaft, dass nach dem Schritt "Auslösen einer Messung"
- die Position des Messtasters durch einen Empfänger eines Positionsmesssytems ermittelt wird;
- die Position des Messtasters an die Auswerteeinheit übertragen wird;
- die Auswerteeinheit eine Differenz Δ zwischen einer Soll-Höhenlage H_{Soll} und der Ist-Höhenlage H_{Ist} ermittelt; und
- die Differenz Δ durch eine Ausgabeeinheit ausgegeben wird.

Bei der Vermessung einer Strangführungsrolle ist oftmals einer Position des Messtasters eine Soll-Höhenlage H_{Soll} zugeordnet.

Es ist zweckmäßig, die Soll-Höhenlage H_{Soll} aus CAD-Daten abzuleiten.

Es ist vorteilhaft, die Soll-Höhenlage H_{Soll}, die Ist-Höhenlage H_{Ist} und die Differenz Δ in einem Messprotokoll zu protokollieren.

Für eine hochgenaue Messung ist es vorteilhaft, beim Schritt "Positionieren des Lasers" den Laser starr (jedoch abnehmbar) mit einem stationären Rahmen der Strangführung oder dem Fundament zu verbinden. Damit macht der Laser dieselben Verschiebungen bzw. Erschütterungen wie die Strangführung mit, sodass sich diese nicht negativ auf die Genauigkeit auswirken.

Es ist vorteilhaft, dass Messsystem nach einem der Ansprüche 1 bis 9 zur Durchführung des Verfahrens nach einem der Ansprüche 10 bis 14 zu verwenden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1 eine Schnittdarstellung einer ersten Ausführungsform eines Messtasters
Fig 2 eine ungeschnittene Darstellung des Messtasters nach Fig 1
Fig 3 eine zweite Ausführungsform eines Messtasters mit zwei Schenkel
Fig 4 eine dritte Ausführungsform eines Messtasters
Fig 5 eine vierte Ausführungsform eines Messtasters
Fig 6 eine Darstellung der erfindungsgemäßen Bestimmung der Höhenlage einer Strangführungsrolle
Fig 7 die Darstellung der erfindungsgemäßen Bestimmung der Höhenlage für drei Strangführungsrollen
Fig 8 eine Darstellung der Bestimmung der Höhenlage einer Strangführungsrolle nach dem Stand der Technik

### Beschreibung der Ausführungsformen

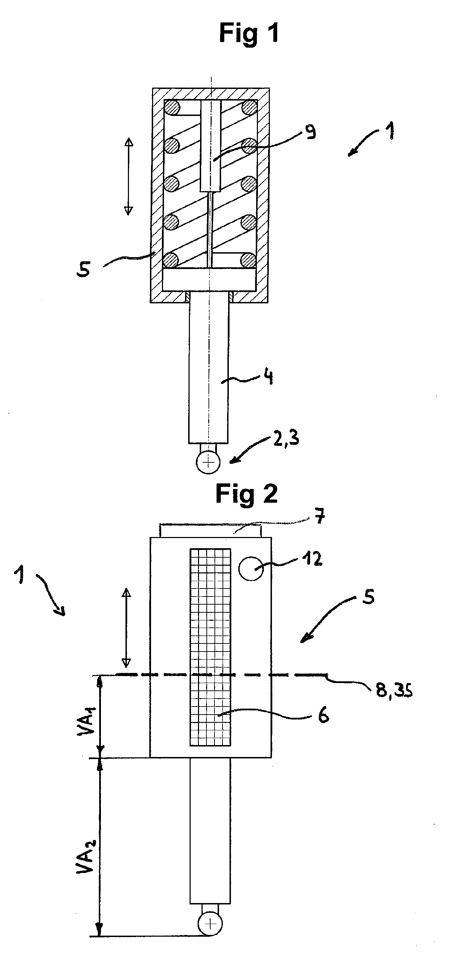

Fig 1 zeigt eine erste Ausführungsform des Messtasters 1 in einer Schnittdarstellung. Die Mantelfläche einer nicht dargestellten zylindrischen Rolle kann mittels des Messtasters 1 abgetastet werden, wobei eine kugelförmige Tastfläche 3 des Tasters 2 die Mantelfläche berührt. Der Taster 2 ist mit einem runden Führungsprofil 4 verbunden, wobei die Laserempfangseinheit 5 gegenüber dem Führungsprofil 4 vertikal verschiebbar und bzgl. der Längsachse des Führungsprofils 4 schwenkbar ausgebildet ist (Verschieberichtung als Pfeil dargestellt). Zur spielfreien Führung weist das Führungsprofil eine geschliffene Oberfläche und die Laserempfangseinheit 5 eine ringförmige Buchse auf. Der Abstand zwischen der Unterkante der Laserempfangseinheit 5 und dem Taster 2 kann durch eine Wegmesseinrichtung 9, die als Potentiometer ausgeführt ist, bestimmt werden. Alternativ zu dem Potentiometer könnte die Wegmesseinrichtung auch als eine LVDT Messeinrichtung, eine magnetostriktive Messeinrichtung oder als ein Messlineal mit elektrischer Schnittstelle ausgeführt sein. Zwischen dem Führungsprofil 4 und dem Gehäuse der Laserempfangseinheit 5 ist eine Druckfeder angeordnet, die die Ruhestellung des Messtasters definiert und einen definierten Kontakt zwischen der Tastfläche 3 und der Rolle sicherstellt.

In Fig 2 ist das Detektorfeld 6 der Laserempfangseinrichtung 5 und ein Laserstrahl 8 bzw. eine Lichtebene 35 dargestellt. Die Abstandsauswerteeinheit 7, die als elektronische Schaltung am oberen Ende der Laserempfangseinrichtung 5 angeordnet ist, ist mit dem Detektorfeld 6 verbunden, wobei die Abstandsauswerteeinheit 7 den ersten vertikalen Abstand VA₁ des Laserstrahls 8 von der Unterkante der Laserempfangseinheit 5 ermitteln kann. Da somit über die Wegmesseinrichtung 9 der zweite vertikale Abstand VA₂ zwischen dem Taster 2 und der Unterkante der Laserempfangseinheit 5 und über die Abstandsauswerteeinheit 7 der vertikale Abstand VA₁ zwischen der Unterkante der Laserempfangseinheit 5 und dem Laserstrahls 8 bekannt sind, kann eine Auswerteeinheit auf dem Messtaster 1 die Ist-Höhenlage *H* = *VA*₁ + *VA*₂ der Strangführungsrolle, d.h. der Abstand zwischen dem Laserstrahl 8, 35 und der Tastfläche (konkret der Oberkante der Strangführungsrolle) bestimmen. Um die Ergonomie bei der Bedienung des Messtasters 1 zu erhöhen, ist ein Auslöser 12 auf dem Messtaster angeordnet. Nach dem Drücken des Auslösers 12 werden die vertikalen Abstände VA₁ und VA₂ ermittelt und in der Auswerteeinheit die Ist-Höhenlage H_{Ist} berechnet. Anschließend wird die Ist-Höhenlage mittels eines Kommunikationsmoduls, das als Bluetooth Schnittstelle ausgeführt ist, an eine - vom Messtaster 1 baulich getrennte - Anzeigeeinheit übermittelt.

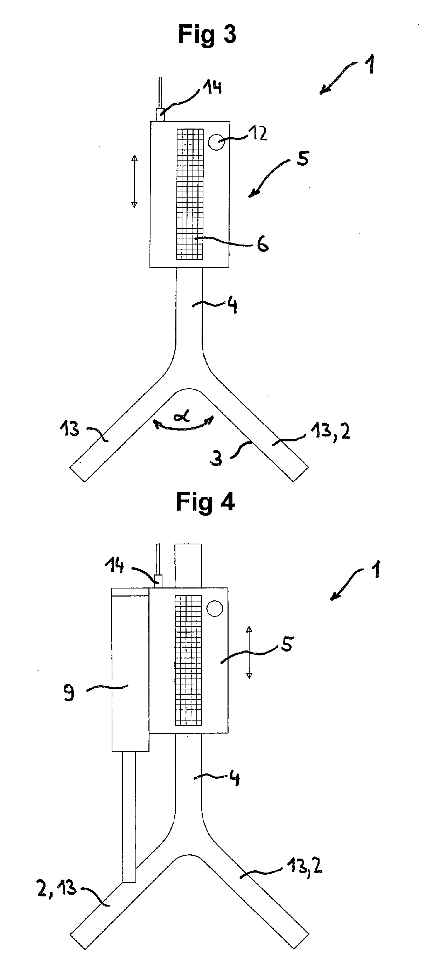

Die Fig 3 zeigt eine zweite Ausführungsform des Messtasters 1, der zwei als Schenkel 13 ausgebildete Taster 2 aufweist. Die beiden Schenkel 13 schließen einen Winkel *α* =90° ein, sodass die zwei Tastflächen 3 der Schenkel 13 die Mantelfläche einer zylindrischen Rolle gleichzeitig berühren. Über die Geometrie der Schenkel 13 und in Kenntnis des Durchmessers der Strangführungsrolle, kann somit wiederum die Höhenlage der Strangführungsrolle bestimmt werden. Außerdem weist der Messtaster 1 einen Empfänger 14 eines sogenannten "Differential GPS" Systems auf, sodass die Position des Messtasters in einer Halle während des Abtastens von Strangführungsrollen bestimmt werden kann. Somit können unterschiedlichen Positionen des Messtasters korrespondierende Soll-Höhenlagen H_{Soll} hinterlegt werden, sodass die Auswerteeinheit jeweils die Abweichung Δ = *H_{Soll}* - *H_{Ist}* ermitteln kann. Bei dieser Ausführungsform ist die Wegmesseinrichtung so wie bei Fig 1 in die Laserempfangseinrichtung 5 integriert.

Die Fig 4 zeigt eine dritte Ausführungsform eines Messtasters 1, wobei jedoch im Gegensatz zu Fig 3 die Wegmesseinrichtung 9 außerhalb der Laserempfangseinrichtung 5 angeordnet ist. In diesem Fall ist die Wegmesseinrichtung als berührungslos arbeitendes sogenanntes magnetostriktives Wegmesssystem (siehe Balluff ""Micropulse") ausgeführt.

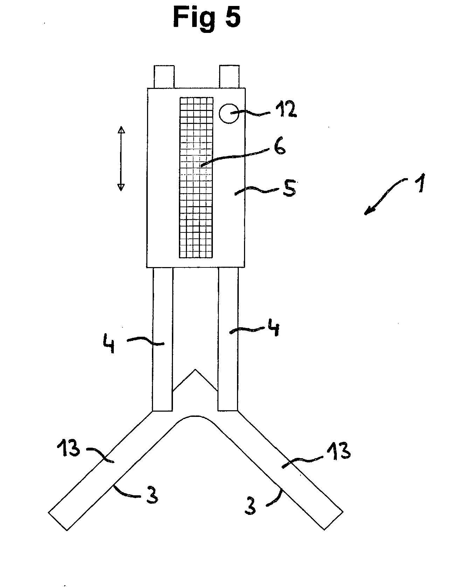

Die Fig 5 zeigt eine vierte Ausführungsform eines Messtasters 1. Im Gegensatz zu Fig 4 weist der Messtaster zwei parallele Führungsprofile 4 auf, sodass die Laserempfangseinheit 5 gegenüber den Schenkeln 13 gegen Verdrehung gesichert ist.

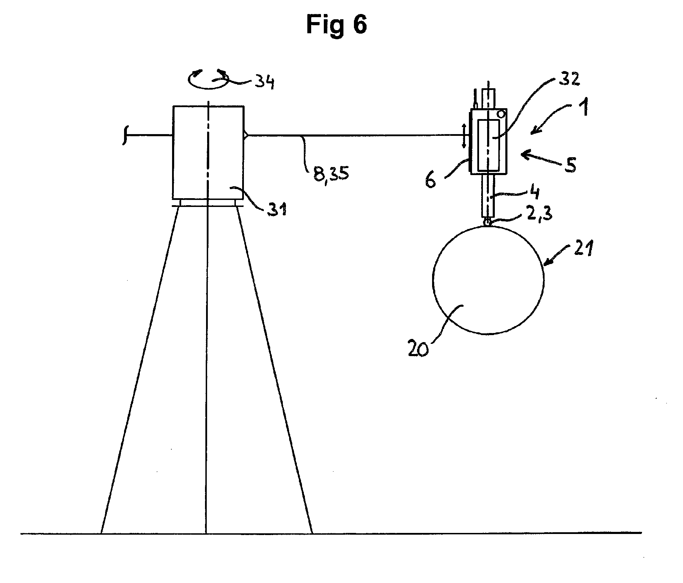

Fig 6 zeigt ein Messsystem, das zur Bestimmung der Höhenlage einer Strangführungsrolle 20 eingesetzt wird. Anfangs wird ein Rotationslaser 31 auf einem Stativ in der Nähe der Strangführungsrolle 20 positioniert, sodass der eingeschaltete Laser durch eine Drehbewegung 34 eine horizontale Lichtebene 35 erzeugt. Anschließend wird die Strangführungsrolle 20 mittels des Messtasters 1 abgetastet, sodass die Tastflächen 3 der beiden als Schenkel 13 ausgeführten Taster 2 die Mantelfläche 21 der Strangführungsrolle 2 berühren. Anschließend wird die Laserempfangseinheit 5 auf dem kreisrunden Führungsprofil 4 derart in vertikaler Richtung verschoben, dass der Laserstrahl 8 der Lichtebene 35 das Detektorfeld 6 schneidet. Nach dem Verschieben wird die vertikale Position der Laserempfangseinrichtung durch eine nicht näher dargestellte Klemm- bzw. Arretiereinrichtung, die zwischen der Laserempfangseinrichtung und dem Führungsprofil wirkt, gesperrt, sodass die Schwerkraft kein Absenken der Laserempfangseinrichtung 5 bewirkt. Anschließend wird eine Messung ausgelöst, in dem ein Auslöser 12 auf der Messeinrichtung 1 gedrückt wird. Nach dem Auslösen ermittelt eine Abstandsauswerteeinheit im Messtaster 1 einen ersten vertikalen Abstand VA₁ zwischen dem Laserstrahl 8 und der Unterkante der Laserempfangseinheit 5. Eine Wegmesseinrichtung ermittelt den zweiten vertikalen Abstand VA₂ zwischen dem Taster 2 und der Unterkante der Laserempfangseinheit 5. Somit ist aber die Ist-Höhenlage der Strangführungsrolle 20 durch *H_{Ist}=VA*₁*+VA*₂ bestimmt, wobei die Ist-Höhenlage in einer Auswerteeinheit, die sich räumlich innerhalb der Laserempfangseinrichtung 5 befindet, berechnet und durch die Ausgabeeinheit 32 dargestellt.

Bei der Justierung des Lasers kann z.B. wie folgt vorgegangen werden: Zuerst wird der Laser fixiert. Anschließend wird die Position der typischerweise vier Referenzauflagepunkte des Segments - jene Punkte wo das Segment am Stand aufliegt - messtechnisch bestimmt, wobei zuerst alle 4 Punkte gemessen werden. Aus den 4 Punkten wird eine Referenz-Messebene bestimmt, wobei ein Punkt (z.B. der sogenannte 4. Punkt, da bekanntlich 3 Punkte eine Ebene aufspannen) gegebenenfalls durch "shimen" an die Referenz-Messebene angepasst wird. Gegebenenfalls wir bei der eigentlichen Vermessung der Höhenlagen ein zweiter Laserempfänger verwendet, der die - nicht notwendigerweise horizontale Ausrichtung der Laserebene - sicherstellt.

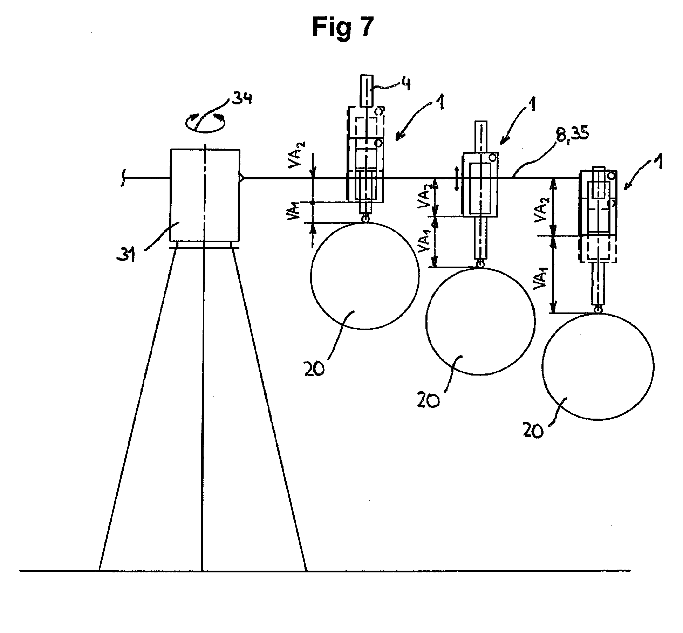

Fig 7 zeigt die Ermittlung der Ist-Höhenlagen für drei Strangführungsrollen 20, wobei die Rollen auf unterschiedlichen Niveaus liegen. Dabei ist zu erkennen, dass die Laserempfangseinheit 5 jeweils auf dem Führungsprofil 4 vertikal verschoben werden muss, damit der Laserstrahl 8, 35 das Detektorfeld 6 schneidet. Gegenüber der mittleren Darstellung wurde die Laserempfangseinheit 5 in der linken Darstellung nach unten verschoben und in der rechten Darstellung nach oben verschoben. Bei der rechten und linken Darstellung ist unverschobene Lage der Laserempfangseinheit 5 gegenüber der mittleren Darstellung strichliert eingezeichnet. Vorteilhaft an der kontinuierlichen Verschiebbarkeit der Laserempfangseinrichtung 5 ist, dass mit einem Messtaster somit ein großer vertikaler Höhenbereich abgedeckt werden kann. Außerdem entfällt das Adaptieren eines starren Messtasters an unterschiedliche Höhenlagen mittels kuppel- oder schraubbarer Adapterplatten bzw. Adapterstäbe.

Es ist natürlich besonders vorteilhaft, wenn der Messtaster 1 einen Empfänger eines Positionsmesssystems, z.B. einen "Differential GPS" Empfänger, aufweist, sodass unterschiedlichen Positionen von Strangführungsrollen jeweils Soll-Höhenlagen H_{Soll} zugeordnet sind. Somit kann der die Auswerteeinheit auf dem Messtaster bereits eine Abweichung Δ = *H_{Soll}* - *H_{Ist}* ermitteln und direkt auf einer Ausgabeeinheit am Messtaster ausgeben.

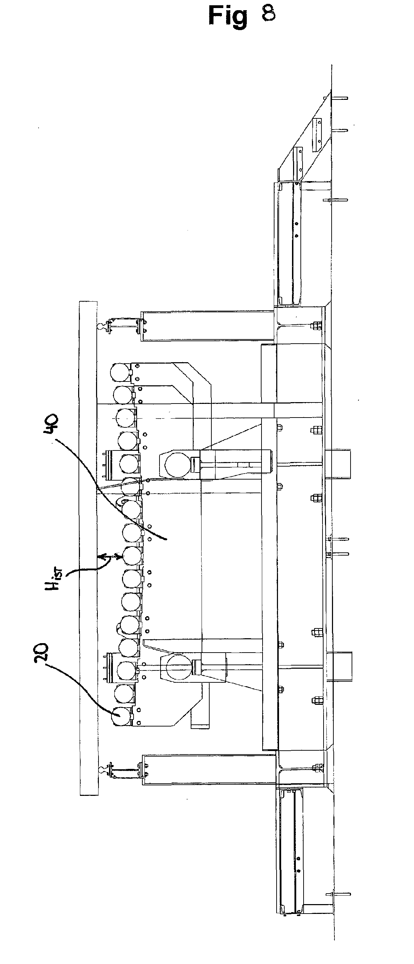

Die Fig 8 zeigt die Ermittlung der Ist-Höhenlage H_{Ist} einer Strangführungsrolle 20 durch ein Stangenmikrometer.

### Bezugszeichenliste

- 1: Messtaster
- 2: Taster
- 3: Tastfläche
- 4: Führungsprofil
- 5: Laserempfangseinheit
- 6: Detektorfeld
- 8: Laserstrahl
- 9: Wegmesseinrichtung
- 11: Kommunikationsmodul
- 12: Auslöser
- 13: Schenkel
- 14: Empfänger des Positionsmesssytems
- 15: Arretiereinrichtung

- 20: Strangführungsrolle
- 21: Mantelfläche

- 30: Auswerteeinheit
- 31: Rotationslaser
- 32: Ausgabeeinheit
- 33: Sender
- 34: Drehbewegung
- 35: Lichtebene

- 40: Strangführungssegment
- 41: Rahmen

- VA₁: erster vertikaler Abstand
- VA₂: zweiter vertikaler Abstand
- α: Winkel

## Patentansprüche

1. Messtaster (1) zur Abtastung einer Mantelfläche (21) einer zylindrischen Rolle (20), aufweisend
- zumindest einen Taster (2) mit einer Tastfläche (3);
- ein vertikales Führungsprofil (4) das starr mit dem Taster (2) verbunden ist;
- eine Laserempfangseinheit (5) mit einem Detektorfeld (6) und einer Abstandsauswerteeinheit (7), wobei die Laserempfangseinheit (5) in vertikaler Richtung auf dem Führungsprofil (4) verschiebbar ist, das Detektorfeld (6) zur Detektion eines Laserstrahls (8) ausgebildet ist, und die Abstandsauswerteeinheit (7) einen ersten vertikalen Abstand VA₁ des Laserstrahls (8) gegenüber der Unterkante der Laserempfangseinheit (5) ermitteln kann; und
- eine Wegmesseinrichtung (9) zur Bestimmung eines zweiten vertikalen Abstands VA₂ zwischen dem Taster (2) und der Unterkante der Laserempfangseinheit (5).

2. Messtaster nach Anspruch 1, **dadurch gekennzeichnet, dass** der Messtaster (1) ein Kommunikationsmodul (11) zur informationstechnischen Verbindung mit einer Auswerteeinheit (30) aufweist, wobei das Kommunikationsmodul (11) mit der Wegmesseinrichtung (9) und der Abstandsauswerteeinheit (7) verbunden ist.

3. Messtaster nach Anspruch 1, **dadurch gekennzeichnet, dass** der Messtaster (1) eine Auswerteeinheit (30) aufweist, wobei die Auswerteeinheit (30) mit der Wegmesseinrichtung (9) und der Abstandsauswerteeinheit (7) verbunden ist.

4. Messtaster nach einem der Ansprüche 2 oder 3, **dadurch gekennzeichnet, dass** ein Auslöser (12) mit dem Kommunikationsmodul (11) oder der Auswerteeinheit (30) signaltechnisch verbunden ist, wobei der Auslöser (12) vorzugsweise auf dem Messtaster (1) angeordnet ist.

5. Messtaster nach Anspruch 1, **dadurch gekennzeichnet, dass** jeweils ein Taster (2) auf einem Schenkel (13) des Messtasters (1) angeordnet ist, wobei zwei Schenkel (13) einen Winkel 45° < α < 135°einschließen.

6. Messtaster nach Anspruch 5, **dadurch gekennzeichnet, dass** der Messtaster zumindest drei Taster aufweist, wobei zwei Taster in einer ersten Ebene und ein Taster in einer zweiten Ebene angeordnet sind, und die erste Ebene parallel zur zweiten Ebene ausgerichtet ist.

7. Messtaster nach Anspruch 1, **dadurch gekennzeichnet, dass** der Messtaster (1) eine Arretiereinrichtung (15) zur Fixierung der Position der Laserempfangseinheit (5) gegenüber dem Führungsprofil (4) oder einen Dämpfer aufweist.

8. Messsystem zur laseroptischen Vermessung einer Höhenlage einer zylindrischen Rolle (20), aufweisend
- einen Laser (31);
- einen Messtaster (1) nach einem der Ansprüche 1 bis 7;
- eine Auswerteeinheit (30), die mit dem Messtaster (1) informationstechnisch verbunden ist; und
- eine Ausgabeeinheit (32) zur Ausgabe der Höhenlage der Rolle (20).

9. Messsystem nach Anspruch 8, **dadurch gekennzeichnet, dass** das Messsystem einen Sender (33) und der Messtaster (1) einen Empfänger (14) eines Positionsmesssystems umfasst, wobei der Empfänger (14) mit dem Kommunikationsmodul (11) oder der Auswerteeinheit (30) signaltechnisch verbunden ist, sodass die Position des Messtasters (1) bestimmbar ist.

10. Verfahren zur laseroptischen Ermittlung einer Ist-Höhenlage H_{Ist} einer Strangführungsrolle (20) in einer Strangführung durch ein Messsystem, umfassend einen Laser (31), einen Messtaster (1) nach einem der Ansprüche 1 bis 7 mit einer Laserempfangseinrichtung (5), einem Detektorfeld (6), einer Abstandsauswerteeinheit (7), einem Taster (2) und einer Tastfläche (3), und einer Auswerteeinheit (30), die mit dem Messtaster (1) informationstechnisch verbunden ist, umfassend folgende Verfahrensschritte:
- Positionieren des Lasers (31);
- Einschalten des Lasers (31);
- Abtasten der Strangführungsrolle (20) mittels des Messtasters (1), wobei zumindest eine Tastfläche (3) des Messtasters (1) einen Punkt auf der Mantelfläche (21) der Strangführungsrolle (20) berührt und ein Laserstrahl (35) das Detektorfeld (6) schneidet;
- Auslösen einer Messung;
- Ermitteln eines ersten vertikalen Abstands VA₁ zwischen dem Laserstrahl (35) und der Unterkante der Laserempfangseinheit (5) durch die Abstandsauswerteeinheit (7) und eines zweiten vertikalen Abstands VA₂ zwischen dem Taster (2) und der Unterkante der Laserempfangseinheit (5) durch die Wegmesseinrichtung (9);
- Berechnen der Ist-Höhenlage H_{Ist} der Strangführungsrolle mit *H_{Ist}* = *VA*₁ + *VA*₂ in der Auswerteeinheit (30).

11. Verfahren nach Anspruch 10, **dadurch gekennzeichnet, dass** nach dem Schritt "Auslösen einer Messung"
- die Position des Messtasters (1) durch einen Empfänger eines Positionsmesssytems (14) ermittelt wird;
- die Position des Messtasters (1) an die Auswerteeinheit (30) übertragen wird;
- die Auswerteeinheit (30) eine Differenz *Δ=H_{Soll} -H_{Ist}* zwischen einer Soll-Höhenlage H_{Soll} und der Ist-Höhenlage H_{Ist} ermittelt; und
- die Differenz Δ durch eine Ausgabeeinheit (32) ausgegeben wird.

12. Verfahren nach Anspruch 11, **dadurch gekennzeichnet, dass** die Soll-Höhenlage H_{Soll} aus CAD-Daten abgeleitet wird.

13. Verfahren nach Anspruch 11, **dadurch gekennzeichnet, dass** die Soll-Höhenlage H_{Soll}, die Ist-Höhenlage H_{Ist} und die Differenz Δ in einem Messprotokoll protokolliert werden.

14. Verfahren nach Anspruch 10, **dadurch gekennzeichnet, dass** beim Schritt "Positionieren des Lasers" der Laser (31) starr mit einem stationären Rahmen (41) der Strangführung (40) oder einem Fundament verbunden wird.

15. Verwendung des Messsystems nach einem der Ansprüche 1 bis 9 zur Durchführung des Verfahrens nach einem der Ansprüche 10 bis 14.

## Claims

1. Measuring touch probe (1) for sampling a circumferential surface (21) of a cylindrical roller (20), having
- at least one touch probe (2) comprising a touch surface (3);
- a vertical guide profile (4) that is rigidly connected to the touch probe (2);
- a laser receiving unit (5) comprising a detector field (6) and a distance evaluation unit (7), wherein the laser receiving unit (5) is displaceable in a vertical direction on the guide profile (4), the detector field (6) is realized for detecting a laser beam (8), and the distance evaluation unit (7) can determine a first vertical distance VA₁ of the laser beam (8) in relation to the lower edge of the laser receiving unit (5); and
- a displacement measuring device (9) for determining a second vertical distance VA₂ between the touch probe (2) and the laser receiving unit (5).

2. Measuring touch probe according to Claim 1, **characterized in that** the measuring touch probe (1) has a communication module (11) for connection by information technology means to an evaluation unit (30), wherein the communication module (11) is connected to the displacement measuring device (9) and to the distance evaluation unit (7).

3. Measuring touch probe according to Claim 1, **characterized in that** the measuring touch probe (1) has an evaluation unit (30), wherein the evaluation unit (30) is connected to the displacement measuring device (9) and the distance evaluation unit (7).

4. Measuring touch probe according to either one of Claims 2 or 3, **characterized in that** an operating control (12) is connected to the communication module (11) or to the evaluation unit (30) by signal technology means, wherein the operating control (12) is preferably arranged on the measuring touch probe (1).

5. Measuring touch probe according to Claim 1, **characterized in that** a touch probe (2) is in each case arranged on a limb (13) of the measuring touch probe (1), wherein two limbs (13) enclose an angle 45° < α < 135°.

6. Measuring touch probe according to Claim 5, **characterized in that** the measuring touch probe has at least three touch probes, wherein two touch probes are arranged in a first plane and one touch probe is arranged in a second plane, and the first plane is aligned parallel to the second plane.

7. Measuring touch probe according to Claim 1, **characterized in that** the measuring touch probe (1) has a locking device (15) for fixing the position of the laser receiving unit (5) in relation to the guide profile (4), or has a damper.

8. Measuring system for laser-optical measurement of a height of a cylindrical roller (20), having
- a laser (31);
- a measuring touch probe (1) according to any one of Claims 1 to 7;
- an evaluation unit (30), which is connected to the measuring touch probe (1) by information technology means; and
- an output unit (32), for outputting the height of the roller (20).

9. Measuring system according to Claim 8, **characterized in that** the measuring system comprises a transmitter (33) and the measuring touch probe (1) comprises a receiver (14) of a position measuring system, wherein the receiver (14) is connected to the communication module (11) or to the evaluation unit (30) by signal technology means, such that the position of the measuring touch probe (1) can be determined.

10. Method for laser-optical determination of an actual height H_{Actual} of a strand guide roller (20) in a strand guide by means of a measuring system, comprising a laser (31), a measuring touch probe (1), according to any one of Claims 1 to 7, that comprises a laser receiving device (5), a detector field (6), a distance evaluation unit (7), a touch probe (2) and a touch surface (3), and an evaluation unit (30), which is connected to the measuring touch probe (1) by information technology means, comprising the following method steps:
- positioning the laser (31);
- switching on the laser (31);
- sampling the strand guide roller (20) by means of the measuring touch probe (1), wherein at least one touch surface (3) of the measuring touch probe (1) contacts a point on the circumferential surface (21) of the strand guide roller (20) and a laser beam (35) intersects the detector field (6);
- initiating a measurement;
- determining a first vertical distance VA₁ between the laser beam (35) and the lower edge of the laser receiving unit (5), by means of the distance evaluation unit (7), and a second vertical distance VA₂ between the touch probe (2) and the lower edge of the laser receiving unit (5), by means of the displacement measuring device (9);
- calculating the actual height H_{Actual} of the strand guide roller, with *H_{Actual} = VA₁* + *VA₂,* in the evaluation unit (30) .

11. Method according to Claim 10, **characterized in that**, after the step "initiating a measurement",
- the position of the measuring touch probe (1) is determined by a receiver of a position measuring system (14);
- the position of the measuring touch probe (1) is transmitted to the evaluation unit (30);
- the evaluation unit (30) determines a difference Δ= *H_{Setpoint} -* H*_{Actual}* between a setpoint height H_{Setpoint} and the actual height H_{Actual}; and
- the difference Δ is output by an output unit (32).

12. Method according to Claim 11, **characterized in that** the setpoint height H_{Setpoint} is derived from CAD data.

13. Method according to Claim 11, **characterized in that** the setpoint height H_{Setpoint}, the actual height H_{Actual} and the difference Δ are recorded in a measurement record.

14. Method according to Claim 10, **characterized in that**, in the step "positioning the laser", the laser (31) is rigidly connected to a stationary frame (41) of the strand guide (40) or to a base.

15. Use of the measuring system according to one of Claims 1 to 9 for execution of the method according to any one of Claims 10 to 14.

## Revendications

1. Palpeur de mesure (1) destiné à balayer une surface d'enveloppe (21) d'un rouleau cylindrique (20), comprenant
- au moins un palpeur (2) pourvue d'une surface de palpage (3) ;
- un profil de guidage vertical (4) relié rigidement au palpeur (2) ;
- une unité de réception laser (5) pourvue d'un champ de détection (6) et d'une unité d'évaluation de distance (7), l'unité de réception laser (5) étant déplaçable verticalement sur le profil de guidage (4), le champ de détection (6) étant conçu pour détecter un faisceau laser (8), et l'unité d'évaluation de distance (7) étant à même de déterminer une première distance verticale VA₁ du faisceau laser (8) par rapport au bord inférieur de l'unité de réception laser (5) ; et
- un dispositif de mesure de déplacement (9) pour déterminer une seconde distance verticale VA₂ entre le palpeur (2) et le bord inférieur de l'unité de réception laser (5).

2. Palpeur de mesure selon la revendication 1, **caractérisé en ce que** le palpeur de mesure (1) comprend un module de communication (11) pour la liaison informatique avec une unité d'évaluation (30), le module de communication (11) étant relié au dispositif de mesure de déplacement (9) et à l'unité d'évaluation de distance (7).

3. Palpeur de mesure selon la revendication 1, **caractérisé en ce que** le palpeur de mesure (1) comprend une unité d'évaluation (30), l'unité d'évaluation (30) étant reliée au dispositif de mesure de déplacement (9) et à l'unité d'évaluation de distance (7).

4. Palpeur de mesure selon l'une des revendications 2 ou 3, **caractérisé en ce qu'**un déclencheur (12) est relié pour la communication des signaux au module de communication (11) ou à l'unité d'évaluation (30), le déclencheur (12) étant disposé de préférence sur le palpeur de mesure (1).

5. Palpeur de mesure selon la revendication 1, **caractérisé en ce que** chaque fois un palpeur (2) est disposé sur une branche (13) du palpeur de mesure (1), deux branches (13) enfermant un angle 45° < α < 135°.

6. Palpeur de mesure selon la revendication 5, **caractérisé en ce que** le palpeur de mesure comprend au moins trois palpeurs, deux palpeurs étant disposés dans un premier plan et un palpeur dans un second plan, et le premier plan étant orienté parallèlement au second plan.

7. Palpeur de mesure selon la revendication 1, **caractérisé en ce que** le palpeur de mesure (1) comprend un dispositif de blocage (15) pour fixer la position de l'unité de réception laser (5) par rapport au profil de guidage (4), ou un amortisseur.

8. Système de mesure pour mesurer par optique laser une position en hauteur d'un rouleau cylindrique (20), comprenant
- un laser (31) ;
- un palpeur de mesure (1) selon l'une des revendications 1 à 7 ;
- une unité d'évaluation (30) reliée informatiquement au palpeur de mesure (1) ; et
- une unité de sortie (32) pour afficher la position en hauteur du rouleau cylindrique (20).

9. Système de mesure selon la revendication 8, **caractérisé en ce que** le système de mesure comprend un émetteur (33) et le palpeur de mesure (1) un récepteur (14) d'un système de mesure de position, le récepteur (14) étant relié pour la communication des signaux au module de communication (11) ou à l'unité d'évaluation (30), permettant ainsi de déterminer la position du palpeur de mesure (1).

10. Procédé pour déterminer par optique laser une position en hauteur réelle H_{Ist} d'un rouleau de guidage (20) de barre coulée dans un dispositif de guidage de barre coulée au moyen d'un système de mesure comprenant un laser (31), un palpeur de mesure (1) selon l'une des revendications 1 à 7 pourvu d'une unité de réception laser (5), d'un champ de détection (6), d'une unité d'évaluation de distance (7), d'un palpeur (2) et d'une surface de palpage (3), et une unité d'évaluation (30) reliée informatiquement au palpeur de mesure (1),
comprenant les étapes de procédé suivantes :
- positionnement du laser (31) ;
- mise en marche du laser (31) ;
- balayage du rouleau de guidage (20) de barre coulée au moyen du palpeur de mesure (1) où au moins une surface de palpage (3) du palpeur de mesure (1) touche un point sur la surface d'enveloppe (21) du rouleau de guidage (20) de barre coulée et un faisceau laser (35) coupe le champ de détection (6) ;
- déclenchement d'une mesure ;
- détermination d'une première distance verticale VA₁ entre le faisceau laser (35) et le bord inférieur de l'unité de réception laser (5) par l'unité d'évaluation de distance (7) et d'une seconde distance verticale VA₂ entre le palpeur (2) et le bord inférieur de l'unité de réception laser (5) par le dispositif de mesure de déplacement (9) ;
- calcul de la position en hauteur réelle H_{Ist} du rouleau de guidage de barre coulée, avec *H_{Ist}=VA₁+VA₂,* dans l'unité d'évaluation (30).

11. Procédé selon la revendication 10, **caractérisé en ce que**, après l'étape « déclenchement d'une mesure »,
- la position du palpeur de mesure (1) est déterminée par un récepteur d'un système de mesure de position (14) ;
- la position du palpeur de mesure (1) est transmise à l'unité d'évaluation (30) ;
- l'unité d'évaluation (30) calcule une différence *Δ=H_{Soll}-H_{Ist}* entre une position en hauteur théorique H_{Soll} et une position en hauteur réelle H_{Ist} ; et
- la différence Δ est affichée par une unité de sortie (32).

12. Procédé selon la revendication 11, **caractérisé en ce que** la position en hauteur théorique H_{Soll} est déduite de données de CAO.

13. Procédé selon la revendication 11, **caractérisé en ce que** la position en hauteur théorique H_{Soll}, la position en hauteur réelle H_{Ist} et la différence Δ sont enregistrées dans un protocole de mesure.

14. Procédé selon la revendication 10, **caractérisé en ce que** dans l'étape « positionnement du laser », le laser (31) est relié rigidement à un cadre stationnaire (41) du dispositif de guidage (40) de barres coulées ou à une embase.

15. Utilisation du système de mesure selon l'une des revendications 1 à 9 pour la mise en oeuvre du procédé selon l'une des revendications 10 à 14.
